(19) Europäisches Patentamt / European Patent Office / Office européen des brevets

(11) **EP 2 972 114 B1**

## (12) FASCICULE DE BREVET EUROPEEN

(45) Date de publication et mention de la délivrance du brevet:
**28.12.2016 Bulletin 2016/52**

(21) Numéro de dépôt: **14720639.5**

(22) Date de dépôt: **13.03.2014**

(51) Int Cl.:
*H02P 6/182* *(2016.01)*    *G01D 18/00* *(2006.01)*
*H02P 6/16* *(2016.01)*

(86) Numéro de dépôt international:
**PCT/FR2014/050575**

(87) Numéro de publication internationale:
**WO 2014/140489 (18.09.2014 Gazette 2014/38)**

(54) **METHODE DE CALIBRATION D'UN CAPTEUR DE POSITION DANS UNE MACHINE ELECTRIQUE SYNCHRONE**

KALIBRIERVERFAHREN EINES POSITIONSSENSORS IN EINER ELEKTRISCHEN SYNCHRONMASCHINE

CALIBRATION METHOD OF A POSITION SENSOR IN A SYNCHRONOUS ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2013 FR 1352299**

(43) Date de publication de la demande:
**20.01.2016 Bulletin 2016/03**

(73) Titulaire: **Renault s.a.s.**
**92100 Boulogne-Billancourt (FR)**

(72) Inventeur: **GARCIA-ESTEBANEZ, Pablo**
**F-78000 Versailles (FR)**

(56) Documents cités:
**CN-B- 101 414 800      US-A1- 2011 057 593**
**US-B2- 6 826 499**

EP 2 972 114 B1

**Description**

La présente invention concerne le domaine technique de la commande des machines électriques et, en particulier, des machines électriques de type synchrone. Elle concerne plus particulièrement une méthode de détermination de la position angulaire électrique du rotor d'une machine électrique synchrone, dans laquelle on fournit un capteur de position apte à acquérir la position angulaire dudit rotor, ladite méthode comprenant une étape de calibration dudit capteur de position dans laquelle une valeur d'offset dudit capteur de position, utilisée pour ajuster une valeur mesurée par ledit capteur de position est déterminée à partir de la détection d'un passage par zéro de la force électromotrice d'une phase à vide du stator de ladite machine électrique, c'est-à-dire à courant nul dans ladite phase.

Une machine électrique de type synchrone comprend une partie fixe appelée stator et une partie mobile appelée rotor. Quand la machine est triphasée, le stator comprend classiquement trois bobines décalées de 120° électriques et alimentées en courant alternatif. Le rotor peut être du type à aimants permanents ou du type bobiné.

Pour faire fonctionner une telle machine électrique et assurer son contrôle, il est important de pouvoir connaître à tout moment la position électrique du rotor de la machine. Pour ce faire, une méthode de détermination de la position du rotor du type précité est bien connue de l'homme du métier. En effet, avant la calibration du capteur de position, celui-ci fournit en réalité la valeur d'une position $\theta_e$ NON CORRIGE dont la valeur correspondant au zéro électrique est fonction du type de capteur et/ou du montage de celui-ci et/ou encore de l'instant de mise sous tension. Or, la vraie position électrique machine, c'est-à-dire la position du rotor par rapport aux bobinages du stator, est essentielle au bon fonctionnement de la machine. Il s'agit donc de déterminer la valeur d'offset du capteur de position $\theta_{OFFSET}$, de sorte à réaliser la correction apte à fournir la vraie position électrique $\theta_e$ du moteur :

$$\theta_e = \theta_{e\,\mathrm{NON\,CORRIGE}} - \theta_{OFFSET}$$

On connaît du document de brevet CN101414800, une méthode de calibration du capteur de position, qui utilise un principe physique largement connu et décrit dans la littérature, selon lequel la position correspondant au zéro électrique de la machine est celle du passage par zéro de la force électromotrice d'une phase à vide du stator de la machine. En effet, par convention, l'angle électrique 0° est généralement défini quand le bobinage de la phase A du stator, à courant nul dans le stator, c'est-à-dire la phase n'étant pas parcourue par un quelconque courant, capte un maximum de flux généré par le rotor. Or, à courant nul dans le stator, la tension à vide VA dans la phase de la machine, soit la force (contre)-électromotrice ou f.e.m., étant vue comme la variation du flux dans cette phase dû uniquement au champ magnétique généré par rotor, une condition nécessaire pour que le flux soit maximal est que $V_A=0$, permettant ainsi de définir $\theta_e = 0°$ comme étant la position du passage par zéro de la f.e.m.

Les méthodes basées sur le principe de la détection du passage par zéro de la f.e.m., telles que celle décrite dans le document de brevet CN101414800, présentent l'avantage de pouvoir réaliser une calibration précise à chaque vitesse de la machine, ce qui permet de masquer des problèmes liés à l'acquisition de la position, susceptibles d'apparaître à différentes vitesses et ainsi, de mieux adapter, dans toute la plage, cette calibration à la réalité électromagnétique (maximum de flux) de la machine. Ce type de calibration évite donc d'avoir à extrapoler les conclusions du comportement du système à vitesse nulle et de mieux prendre en compte la réalité des systèmes de mesure.

Cependant, avec des solutions de mesure de tension classique, la fréquence de mesure et d'acquisition est fixe et imposée par d'autres contraintes du système. Aussi, afin de pallier les erreurs liées à l'échantillonnage imposé par le système, et afin de pouvoir détecter précisément et rapidement le passage par zéro de la f.e.m., la méthode décrite dans le document CN101414800 prévoit une électronique dédiée pour la détection du passage par zéro de la f.e.m. et pour générer une interruption (ou « trigger » selon la terminologie anglo-saxonne) utilisée par un processeur type DSP ou autre, pour déclencher l'acquisition de la position angulaire correspondante.

Or, l'utilisation d'une électronique dédiée pour la mise en oeuvre de la procédure de calibration du capteur entraîne un surcoût non négligeable. En outre, en plus du surcoût lié à cette électronique dédiée, cette méthode est relativement complexe à mettre en oeuvre car l'interruption et la récupération de la position aux fins de la calibration doivent faire objet d'une intégration soigneuse, afin d'éviter d'entrer en conflit avec l'acquisition périodique de la position angulaire utilisée par le programme principal de contrôle de la machine.

Dans ce contexte, la présente invention a pour but de proposer une méthode de calibration d'un capteur de position dans une machine électrique synchrone, basée sur la mesure directe de la f.e.m. des phases à vide de la machine, exempt de l'une au moins des limitations précédemment évoquées.

A cette fin, la méthode de l'invention, par ailleurs conforme à la définition générique qu'en donne le préambule ci-dessus, est essentiellement caractérisée en ce qu'elle comprend:

- une étape de mesure de la tension de ladite phase à vide au moyen d'au moins un capteur de tension, consistant à mesurer périodiquement ladite tension selon un pas d'échantillonnage temporel donné ;

- une étape d'acquisition et de mémorisation des positions angulaires électriques dudit rotor à chaque passage par zéro avec une pente négative de ladite tension entre deux pas d'échantillonnage temporel consécutifs ;
- une étape de correction desdites positions angulaires ainsi obtenues, en fonction de la vitesse de rotation de ladite machine électrique et dudit pas d'échantillonnage temporel donné ; et
- une étape de filtrage desdites positions angulaires ainsi obtenues, de manière à obtenir une valeur moyenne représentative de ladite valeur d'offset dudit capteur de position.

En variante, ladite étape de correction peut être réalisée après ladite étape de filtrage, de sorte à appliquer ladite correction en fonction de la vitesse de rotation de ladite machine électrique et dudit pas d'échantillonnage temporel donné, directement sur ladite valeur moyenne issue de ladite étape de filtrage.

Avantageusement, ladite étape de mesure de la tension de ladite phase à vide est déclenchée après une étape préalable de vérification consistant à vérifier que le signe de la dérivée de ladite tension est négatif.

Avantageusement, ladite étape préalable de vérification peut en outre consister à vérifier que la vitesse de rotation de ladite machine électrique est non nulle et sensiblement stable.

Avantageusement, ladite étape préalable de vérification peut en outre consister à vérifier que le stator n'est parcouru par aucun courant.

Avantageusement, ladite étape de filtrage comprend l'établissement d'au moins une plage angulaire d'exclusion dudit filtrage et, lorsqu'une position angulaire acquise tombe dans ladite plage angulaire d'exclusion, l'application d'un décalage angulaire à chacune desdites positions angulaires pour sortir de ladite plage angulaire d'exclusion, l'application d'un filtrage de type passe-bas aux dites positions angulaires ainsi décalées et le retrait dudit décalage angulaire à la valeur obtenue après filtrage.

L'application dudit décalage angulaire entraîne préférentiellement une remise à l'état initial d'un compteur apte à apte à déterminer que le filtrage a convergé après un temps de convergence préalablement déterminé en fonction de la vitesse de rotation de ladite machine électrique, au terme duquel ladite valeur obtenue après filtrage est validée.

Avantageusement, une étape de correction de ladite valeur d'offset dudit capteur de position peut être effectuée en fonction de la position dudit capteur de tension.

En variante, on peut utiliser plusieurs capteurs de tension aptes à fournir plusieurs mesures distinctes de tension de phase ou phase-phase à vide, on exécute en parallèle lesdites étapes de la méthode décrite ci-dessus pour chacune desdites mesures de tension et on effectue une pondération des différents résultats obtenus à partir desdits capteurs de tension.

La méthode décrite ci-dessus peut être implémentée de façon logicielle, de préférence dans le programme principal de contrôle du fonctionnement de la machine électrique. Cette méthode est donc relativement simple à mettre en oeuvre et peu coûteuse.

Il est en outre proposé un programme d'ordinateur comportant des instructions pour exécuter la méthode décrite ci-dessus. Ce programme peut être implémenté dans un processeur embarqué dans un véhicule automobile, par exemple un microcontrôleur, un DSP (de l'anglais « Digital Signal Processor ») ou autre, dans lequel est implémenté le programme principal de contrôle de la machine électrique.

D'autres particularités et avantages de l'invention ressortiront à la lecture de la description faite ci-après d'un mode de réalisation particulier de l'invention, donné à titre indicatif mais non limitatif, en référence aux dessins annexés dans lesquels :

- la Figure 1 est un organigramme illustrant les étapes de la méthode conforme à la présente invention ;
- la Figure 2 illustre la variation de la tension de phase à vide en fonction du temps, conjointement avec la variation de l'angle électrique non corrigé ;
- la Figure 3 illustre schématiquement différentes positions possibles du capteur de tension dans un moteur bobiné en étoile ;
- la Figure 4 est un organigramme illustrant le processus de filtrage mis en oeuvre dans la méthode selon l'invention ;
- la Figure 5 est un schéma illustrant l'établissement de plages angulaires d'exclusion pour la mise en oeuvre du filtrage ; et
- la Figure 6 est un schéma définissant le triangle des tensions dans le cas d'un moteur bobiné en étoile.

La méthode selon la présente invention vise donc à réaliser la calibration du capteur de position d'une machine électrique synchrone à aimants permanents ou à rotor bobiné, basée sur la détection du passage par zéro de la f.e.m. d'une phase à vide de la machine, et à intégrer cette calibration dans le programme principal de contrôle de la machine, sans besoin d'interruption externe ou d'électronique dédiée.

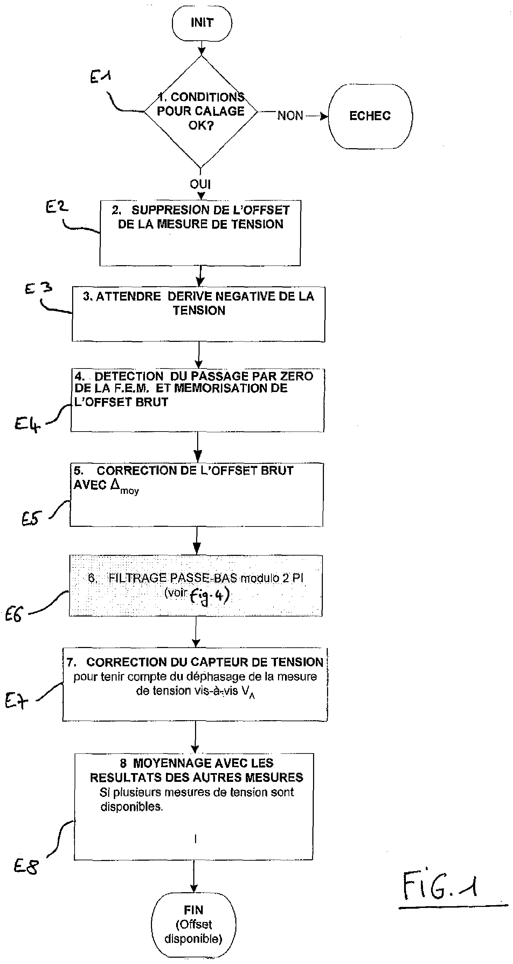

La procédure de calibration du capteur de position peut être décomposée en plusieurs étapes, illustrées en référence à la figure 1. Ainsi, il convient en préalable de vérifier si les conditions pour la mise en oeuvre de la procédure de calibration sont atteintes. En effet, la définition du zéro de l'angle électrique comme étant l'instant du passage de la f.e.m. par zéro d'une phase à vide de la machine, est liée à un principe physique déjà énoncé plus haut, qui implique la réunion d'un certain nombre de conditions, comme détaillé ci-après.

En effet, hors charge (i.e. courant nul dans le stator, $I_{stator} = 0$), la tension à vide dans une phase de la machine, aussi connue comme force (contre)-électromotrice ou f.e.m., est donnée par l'expression suivante :

$$V = \frac{d\Psi}{dt}$$

où V est la tension dans une phase de la machine et $\psi$ est le flux dans cette phase. A vide, $\psi$ est dû uniquement au champ magnétique créé par le rotor.

En l'absence de courant dans le stator (induit) de la machine, on peut écrire cette relation en fonction de l'angle électrique $\theta_e$ et de la vitesse électrique $\Omega_e$ de la machine :

$$V = \frac{d\Psi}{d\theta_e} \cdot \frac{d\theta_e}{dt} = \frac{d\Psi}{d\theta_e} \cdot \Omega_e$$

Dans une machine synchrone, la vitesse électrique $\Omega_e$ est un multiple p constant de la vitesse mécanique $\Omega_m$ de l'arbre, p étant le nombre de paires de pôles de la machine. Les angles électrique et mécanique sont liés par ce même facteur de proportionnalité. On peut donc écrire :

$$\theta_e = \theta_e(t_0) + p\,\theta_m = \theta_e(t_0) + \Delta\theta_e$$

Le terme initial $\theta_e(t_0)$ de l'angle électrique ne peut pas être choisi de manière aléatoire, mais dépend réellement de la position électromagnétique du rotor par rapport aux bobinages du stator. Aussi, avant calibration, le capteur de position, après un premier traitement en fonction de type du capteur et de p, fournira une valeur d'angle électrique $\theta_e$ NON CORRIGE.

D'où le besoin de déterminer la valeur d'offset $\theta_{OFFSET}$, ou valeur de décalage, du capteur par rapport à la vraie position électrique de la machine, afin de réaliser une correction fournissant le vrai angle électrique de la machine, selon la relation :

$$\theta_e = \theta_{e\,NON\,CORRIGE} - \theta_{OFFSET}$$

Comme exposé plus haut, l'angle électrique 0° est défini, par convention, quand le bobinage de la phase A du stator (ladite phase n'étant pas parcouru par un quelconque courant, $I_{stator}=0$) capte un maximum du flux $\psi$ généré par le rotor. On défini donc $\theta_e = 0°$ comme étant la position angulaire du rotor par rapport au stator où la dérivé du flux vue par la phase A s'annule, soit :

$$\left. \frac{d\Psi_A}{d\theta_e} \right|_{\substack{\Psi = \Psi\,max \\ I_{stator} = 0}} = 0$$

On déduit ainsi qu'une condition nécessaire pour que le flux $\psi_A$ soit maximal implique que $V_A = 0$ (stator à vide et vitesse non nulle).

La condition précédente n'est toutefois pas suffisante, car elle peut correspondre à un maximum ou à un minimum de flux. Pour discerner entre ces deux possibilités, il est donc nécessaire d'établir la dérivée seconde du flux. Pour que le flux soit à une valeur maximale, il faut que sa dérivée seconde soit négative, soit :

$$\frac{d^2\Psi_A}{d\theta_e^2} < 0$$

Or, à partir de l'expression $\frac{dV}{dt}$ écrite en l'absence de courant dans le stator de la machine :

$$\frac{dV_A}{dt} = \frac{d^2\Psi_A}{d\theta_e^2}\Omega_e^2 + \frac{d\Psi_A}{d\theta_e}\frac{d\Omega_e}{dt}$$

on peut déduire que, lorsque la vitesse est constante ou varie peut ( $\frac{d\Omega_e}{dt} \approx 0$ ), la dérivée seconde du flux $\frac{d^2\Psi_A}{d\theta_e^2}$ a le même signe que $\frac{dV}{dt}$.

Aussi, lorsqu'on extrait la valeur d'offset $\theta_{OFFSET}$ du capteur de position, correspondant à l'angle mesuré par le capteur au moment de la détermination du passage par zéro de la tension de la phase à vide de la machine, il est nécessaire de s'assurer au préalable que la dérivée (pente) de la tension est négative au moment où cette tension passe par zéro.

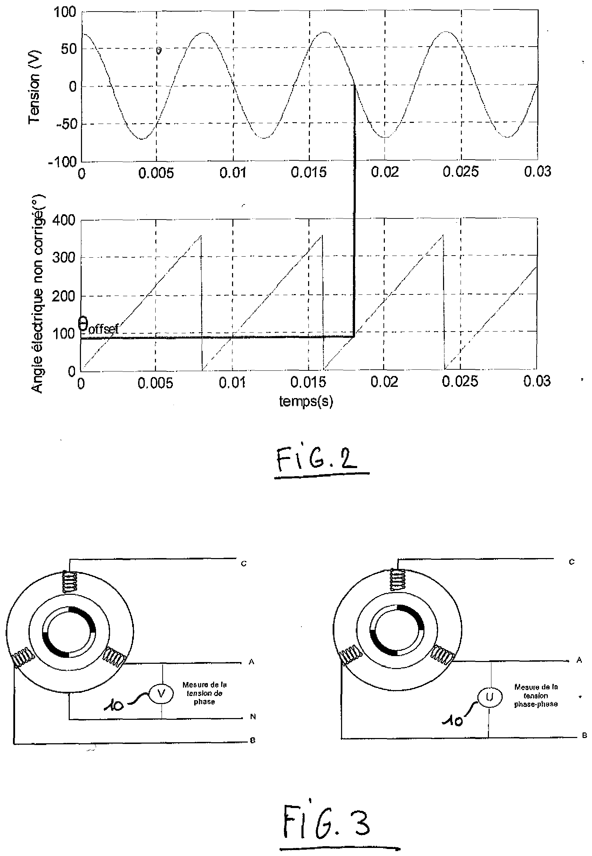

La figure 2 illustre le passage par zéro de la tension de phase à vide avec une dérivée (pente) négative, définissant le zéro de l'angle électrique, ce qui permet d'obtenir la valeur d'offset $\theta_{OFFSET}$ du capteur de position selon les principes exposés ci-dessus et ainsi d'obtenir par la suite la vraie position angulaire du rotor par la soustraction :

$$\theta_e = \theta_{e\,NON\,CORRIGE} - \theta_{OFFSET}$$

En résumé de ce qui précède, on arrive donc à un ensemble de conditions nécessaires et suffisantes pour déterminer le zéro de l'angle électrique comme l'instant du passage par zéro de la tension dans une phase à vide la machine et ce sont ces conditions qu'il convient de vérifier préalablement aux étapes de détection proprement dite du passage par zéro de la tension à vide et de mémorisation de la position angulaire correspondante du rotor, fournissant la valeur d'offset du capteur de position.

Il s'agit ainsi principalement de vérifier, dans une étape E1, que la vitesse est non nulle et à peu près stable (la mesure de la vitesse étant intrinsèquement disponible dans le système de contrôle de la machine électrique), que l'induit de la machine (généralement le stator) est à vide ($I_{stator}=0$) et que le rotor de la machine produit un champ magnétique suffisamment important pour pouvoir détecter et exploiter une variation du flux. Dans le cas d'une machine à aimants permanents, la magnétisation est assurée par les aimants et, dans le cas d'une machine à rotor bobiné, cette magnétisation sera réalisée en alimentant le rotor. Puis, au moment d'extraire la valeur d'offset $\theta_{OFFSET}$ du capteur de position, il s'agit de vérifier, dans une étape E3, que la dérivée (pente) de la tension est négative au moment où celle-ci passe par zéro. Il est bien connu que quand on estime une dérivée, il est toujours nécessaire de filtrer le calcul pour limiter le bruit. Dans ce cas précis, il est important de remarquer que l'on s'intéresse uniquement au signe de la dérivée et non pas à sa valeur plus au moins précise. En pratique, il n'est pas difficile de réaliser le calcul d'une dérivée filtrée dont le retard du filtre n'altère pas le signe de la dérivée au passage par zéro. Pour ce faire, la dérivée filtrée doit être retardé de moins de 90° par rapport à la dérivée non filtrée.

Cette étape E3 de détermination du signe de la dérivée de la tension de phase à vide peut être précédée d'une étape E2 de vérification que le capteur de tension utilisé pour la mesure de la tension ne subit pas de déviation statique (offset) et de suppression de cette déviation, le cas échéant.

Une fois que les conditions vérifiées dans les étapes E1-E3 sont atteintes ($\Omega_e$ = constante non nulle ; $I_{stator}=0$ ; magnétisation de la machine par le rotor ; attente de la dérivée négative de la tension de la phase à vide), une étape E4 de détection du passage par zéro de la tension de la phase à vide (f.e.m.) est mise en oeuvre. Plus précisément, la tension de la phase à vide étant mesurée selon un intervalle de temps de mesure correspondant à un pas d'échantillonnage temporel $T_s$ donné et imposé par le système, on mémorise la valeur de l'angle fournie par le capteur de position au pas k à chaque fois que la tension mesurée change de signe et devient négative entre deux intervalles de temps de mesure consécutifs, soit entre les pas d'échantillonnage temporel k-1 et k. Ces positions angulaires acquises par le capteur de position et mémorisées au pas k, respectivement à chaque changement de signe de la tension de phase à vide mesurée, est appelé par la suite $\theta_{\text{OFFSET\_BRUT}}$ (k).

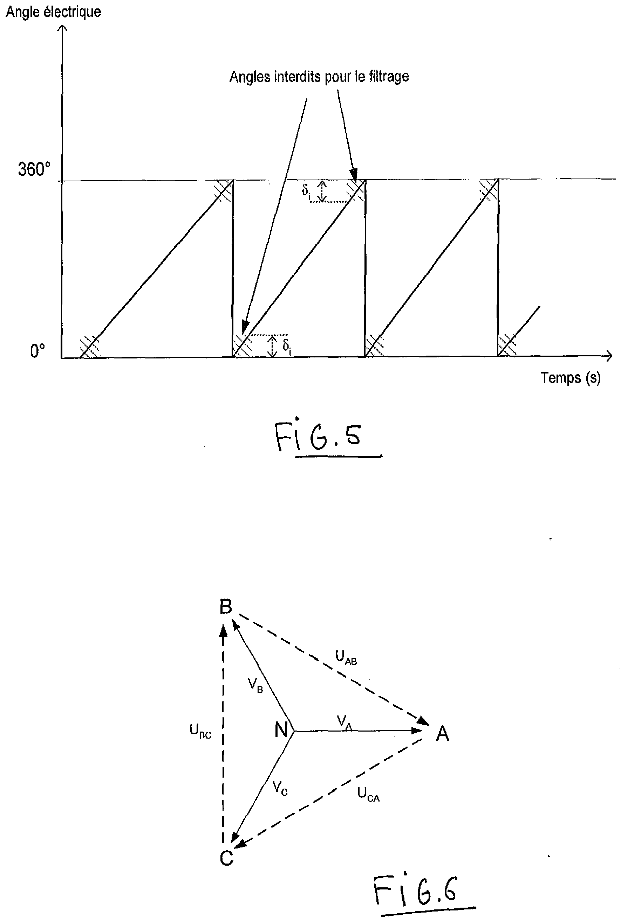

La figure 3 illustre deux positions possibles d'un capteur de tension 10 dans un moteur bobiné en étoile. A gauche, le point neutre N est accessible et le capteur de tension 10 est positionné entre une phase A et le neutre N, et mesure directement la tension de la phase A à vide $V_A$(t). A droite, le point neutre n'est pas accessible, et le capteur de tension 10 mesure la tension U entre deux phases A et B, sachant qu'il existe entre elles une relation bien déterminée. La figure 6 montre, en utilisant une représentation dite de « vecteurs tournants », bien connue de l'homme du métier, la relation existant entre la tension phase-neutre et la tension entre deux phases. Par exemple, dans le cadre d'un bobinage triphasé sinusoïdal (le plus commun), on peut déduire l'expression de la tension de la phase à vide $V_A$(t) partir de la tension composée $U_{AB}$(t) à l'aide de la relation vectorielle suivante :

$$\vec{V}_A = \frac{\left|\vec{U}_{AB}\right|}{\sqrt{3}} e^{j\left(\theta_{U_{AB}} + \frac{\pi}{6}\right)}$$

Ainsi, dans ce cas de figure, au passage par zéro de la tension mesurée $U_{AB}$(t), il faudra ajouter pi/6=30° à l'angle mesuré pour obtenir l'angle de passage par zéro de la tension de la phase A à vide $V_A$(t). On verra par la suite, en référence à l'étape E7, qui sera décrite plus loin, la généralisation à n'importe quelle autre position du capteur de tension.

Puis, une étape E5 de correction des positions angulaires brutes $\theta_{\text{OFFSET\_BRUT}}$ (k) mémorisées à chaque détection de passage par zéro de la tension de tension de phase à vide, est mise en oeuvre. En effet, comme expliqué précédemment, la détection du passage par zéro de la tension de tension de phase à vide et la mémorisation de la position angulaire brute qui en découle, ont lieu au cours du pas d'échantillonnage temporel k dans lequel on a détecté que la tension VA mesurée de la phase à vide a changé de signe par rapport au pas précédent. Or, en réalité, la tension de la phase à vide mesurée a pu changer de signe à n'importe quel moment entre le pas d'échantillonnage temporel précédent et le pas d'échantillonnage temporel courant. Autrement dit, entre le moment de l'inversion réelle du signe de la tension de la phase à vide, correspondant au moment réel du passage à zéro de la tension et l'instant où l'on a capturé la position angulaire brute correspondant à la détection de ce changement de signe par le système, la position angulaire a pu également varier d'une valeur comprise entre 0 et $\Omega_e T_S$ radians. Or, cette valeur d'erreur, qui correspond au bruit d'échantillonnage temporel, peut être importante et représenter jusqu'à quelques dizaines de degrés pour les très hautes vitesses. Aussi, il convient de corriger la position angulaire brute $\theta_{\text{OFFSET\_BRUT}}$ (k) mémorisée au pas k pour tenir compte de cette valeur d'erreur. Pour ce faire, l'étape de correction E5 de la mesure de la position angulaire acquise au pas k tient compte d'une part, de la vitesse de rotation et, d'autre part, du pas d'échantillonnage temporel $T_S$, de manière à ce que cette mesure ait un bruit avec une moyenne nulle :

$$\theta_{\text{OFFSET}}(k) = \theta_{\text{OFFSET\_BRUT}}(k) - \Delta_{moy}$$

avec, en pratique, le bruit moyen de la position angulaire $\Delta_{\text{moy}} = \Omega_e T_s/2$, soit :

$$\theta_{\text{OFFSET}}(k) = \theta_{\text{OFFSET\_BRUT}}(k) - \frac{T_s \Omega_e}{2}$$

En effet, on a pu constater expérimentalement que les différents bruits de mesure et de quantification des capteurs sont uniformément répartis avec un bruit moyen de la position $\Delta_{\text{moy}}$ autour de $\Omega_e T_S/2$.

Par ailleurs, en fonction de la valeur du pas d'échantillonnage temporel $T_s$, il est possible de choisir des vitesses précises $\{\Omega_e\}$ pour lesquelles le bruit d'échantillonnage temporel a aussi une répartition uniforme de moyenne connue $\Omega_e T_s/2$. Aussi, on utilisera de préférence ces vitesses pour réaliser la calibration.

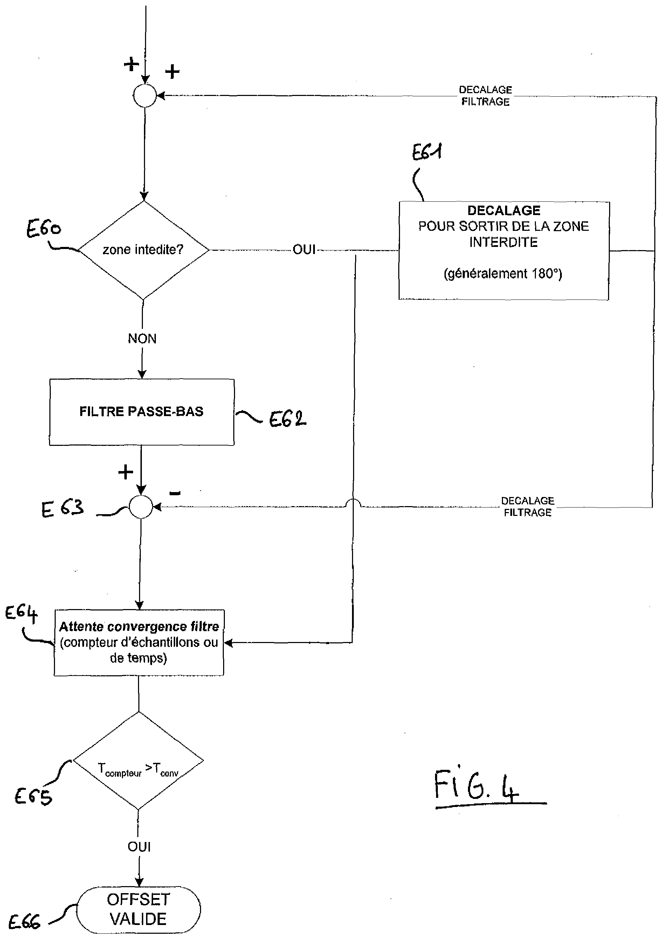

Suite à l'étape E5 de correction des positions angulaires brutes acquises à chaque détection du passage par zéro de la tension de phase à vide, une étape E6 de filtrage des positions angulaires corrigées $\theta_{\text{OFFSET}}$ (k) est mise en oeuvre, afin d'obtenir une valeur moyenne représentative de la valeur d'offset du capteur de position. L'opération de filtrage mis en oeuvre à l'étape E6 est plus particulièrement décrite en référence à la figure 4 et consiste à établir des plages angulaires d'exclusion du filtrage, dans lesquelles le filtrage des données est interdit. En effet, à cause de l'implantation numérique des logiciels, la position angulaire est toujours donnée dans un intervalle fini, généralement dans un intervalle 0-360° (appelé modulo $2\pi$), ou encore dans un intervalle de $\pm 180°$. Aussi, les valeurs proches de 0 et de 360° sont problématiques lorsqu'on veut faire une moyenne (ou un filtrage). A titre d'exemple illustrant cette problématique, la véritable valeur moyenne entre les deux valeurs d'angle suivants, physiquement très proches, que sont 0,02° et 359,59° est de 0,005°. Cependant, un calcul classique de la moyenne, soit (0,02° + 359,59°)/2, conduit à obtenir une valeur d'angle moyen de 180.005°, qui présente une erreur considérable.

Aussi, pour pallier ce phénomène, on établit des plages angulaires d'exclusion δi, dans lesquelles on interdit le filtrage des donnés, comme représentées à la figure 5 par les régions aux motifs hachurés. La valeur de δi dépendra de la variation que l'angle électrique peut avoir sur un pas de calcul, donc il dépendra fondamentalement de la vitesse de la machine, de la fréquence d'échantillonnage et des erreurs de quantification (liés au nombre de bits) des différents signaux. A forte vitesse, l'échantillonnage temporel est la source la plus importante d'erreur (l'angle peut varier de $\Omega_e T_s$ sur un pas). Aussi, on choisira de préférence une plage angulaire d'exclusion de l'ordre de abs (max($\Omega_e$)$T_s$).

Plus précisément, en référence à la figure 4, une fois ces plages angulaires d'exclusion établies, dès qu'une position angulaire acquise est détectée dans une étape E60 comme tombant dans ces plages angulaires d'exclusion, on ajoute, dans une étape E61, un décalage angulaire, généralement 180°, à la position avant le filtrage proprement dit. Puis, au terme d'un filtrage de type passe-bas mis en oeuvre dans une étape E62, on retire ce décalage angulaire pour revenir à l'angle original dans une étape E63.

Bien entendu, il est sous-entendu que, à chaque opération d'adition ou soustraction d'une donnée de position angulaire, il y aura une mise à l'échelle (opération modulo $2\pi$) pour que l'angle reste toujours entre 0 et 360°.

Si cette opération de décalage pour sortir de la zone interdite et puis de filtrage passe-bas est appliquée à l'exemple donné plus haut :

a) on obtient, après l'ajout d'un décalage de 180°, les deux valeurs suivantes :

modulo_2pi (0,02° + 180°) =180,02°
modulo_2pi (359,99+180°) = 179,59°

b) ce qui conduit à une moyenne de (180,02°+179,59°) / 2= 180,005° après le filtrage (qui consiste, dans cet exemple, en le calcul de la moyenne des deux valeurs) ;
c) Puis, on enlève le décalage de 180°, de sorte à obtenir ainsi la valeur de 0,005° correspondant à la véritable valeur d'offset.

Par ailleurs, il est nécessaire d'attendre que l'opération de filtrage converge afin d'assurer un filtrage correct des différents bruits. Pour ce faire, toute application du décalage angulaire pour sortir de la plage angulaire d'exclusion entraîne dans une étape E64 une remise à l'état initial d'un compteur de temps (ou de nombre d'échantillons) nécessaire pour la convergence du filtre, en ce qu'il permet de mesurer dans une étape E65 un temps de convergence $T_{conv}$ du filtrage, au terme duquel la valeur d'offset obtenue est validée dans une étape E66.

Pour le filtrage des données de position angulaire au passage par zéro de la tension de la phase à vide, on peut utiliser toute sorte de filtre passe-bas, parmi lesquels les filtres à réponse impulsionnelle finie ou filtres FIR (en anglais « Finite Impulse Reponse »), qui sont particulièrement bien adaptés et surtout faciles à implémenter, car ils utilisent un nombre fini N d'échantillons.

Dans notre cas, chaque échantillon est la valeur de la position angulaire acquise et mémorisée à chaque détection du passage par zéro de la tension de phase à vide, et est donc fourni à la cadence imposée par la vitesse électrique de la machine. Dans un filtre FIR à N échantillons de valeurs valides, on aura donc un temps de convergence $T_{conv}$ qui dépendra de la vitesse électrique $\Omega e$ (en rad/s) :

$$\mathrm{Tconv}_{\mathrm{filtre\_FIR\_Npoints}} = \frac{2\pi \cdot N}{\Omega_e}$$

Par rapport à ce qui précède, les étapes E5 de correction des positions angulaires acquises pour tenir compte du bruit d'échantillonnage temporel et E6 de filtrage pour obtenir la valeur moyenne représentative de la valeur d'offset du capteur de position, peuvent également être inversées. Ainsi, la correction $-\Delta_{moy}$ décrite en référence à l'étape E5, tenant compte de la vitesse de rotation et de la durée du pas d'échantillonnage temporel $T_s$, peut être réalisée seulement après l'étape de filtrage E6, directement sur la valeur d'offset une fois filtrée.

Une étape E7 de correction de la position angulaire brute acquise en fonction de la position du capteur de tension utilisé peut également être mise en oeuvre. A noter que cette étape E7 de correction pourrait également être implémentée avant l'étape E4 préalablement décrite de détection du passage par zéro de la tension de phase à vide et de mémorisation de la valeur d'offset brute, une fois les conditions de mesure réunies. Cette étape vise à tenir compte du déphasage éventuel de la mesure de tension fourni par le capteur de tension vis-à-vis de la tension de la phase A $V_A$.

En effet, on a vu que par convention, le 0° électrique est défini par rapport à la phase A du stator. Aussi, en fonction de la position du capteur de tension et de la tension qui sera donc réellement mesurée, on devra corriger l'angle mesuré pour se ramener à l'angle correspondant au maximum du flux dans la phase A.

Prenons le cas d'un moteur bobiné en étoile. Avec le triangle de tensions représenté à la figure 6, on obtient facilement la table de correction suivante, fournissant la valeur de correction à appliquer à l'angle mesuré en fonction de la position du capteur de tension utilisé et donc, de la tension effectivement mesurée, phase-neutre ou phase-phase :

| Tension mesurée | Angle mesuré avant correction | Angle corrigé pour réaliser le calage par rapport à la phase A |
|---|---|---|
| $V_A$ | $\alpha_A$ | $\theta_e = \alpha_A$ |
| $V_B$ | $\alpha_B$ | $\theta_e = \alpha_B - 120°$ |
| $V_C$ | $\alpha_C$ | $\theta_e = \alpha_C - 240°$ |
| $U_{AB}$ | $\alpha_{AB}$ | $\theta_e = \alpha_{AB} + 30°$ |
| $U_{BC}$ | $\alpha_{BC}$ | $\theta_e = \alpha_{BC} + 270°$ |
| $U_{CA}$ | $\alpha_{CA}$ | $\theta_e = \alpha_{CA} + 150°$ |

En variante, on peut prévoir d'utiliser plusieurs capteurs de tension, au lieu d'un seul comme décrit précédemment. En effet, la redondance de capteurs de tension permet de mieux calibrer le 0° électrique par rapport à l'ensemble des bobinages de la machine, ce qui permet d'optimiser les performances de la machine par rapport à des imperfections éventuelles du bobinage (imperfections par rapport à une distribution parfaitement symétrique et sinusoïdale de toutes les phases). Dans ce cas, on exécutera en parallèle les étapes E1-E7, qui ont été précédemment décrites, pour chaque mesure de tension disponible, phase-neutre ou phase-phase. Ensuite, une étape E8 de prise en compte des différents résultats obtenus à l'aide des différents capteurs de tension est mise en oeuvre, consistant à effectuer une pondération de ces résultats, par exemple par un calcul de moyenne.

Par exemple, si l'on dispose de trois mesures différentes de tension phase-neutre fournies par trois capteurs de tension phase-neutre :

$$\theta_e = \frac{\alpha_A + (\alpha_B - 120°) + (\alpha_C - 240°)}{3}$$

Selon un autre exemple, si l'on dispose de de trois mesures différentes de tension phase-phase fournies par trois capteurs de tension phase-phase :

$$\theta_e = \frac{(\alpha_{AB} + 30°) + (\alpha_{BC} + 270°) + (\alpha_{CA} + 150°)}{3}$$

La méthode telle qu'elle vient d'être décrite permet avantageusement de réaliser la calibration du capteur de position d'une machine électrique synchrone à aimants permanents ou à rotor bobiné à des vitesses non nulles, ce qui permet de compenser les erreurs de la chaine d'acquisition, du capteur ou du processus de décodage, et de mieux s'approcher de la réalité électromagnétique de la machine sur toute la plage de fonctionnement, avec l'objectif de mieux optimiser les performances du contrôle et le rendement de la machine. La méthode de l'invention intègre en outre avantageusement des étapes de correction et de filtrage de l'erreur d'échantillonnage de la mesure de la position. Cela permet de proposer un processus de calibration facilement intégrable dans le programme principal de contrôle de la machine, avec le même temps d'échantillonnage des signaux physiques, sans qu'il soit besoin de réaliser une tâche spécifique, ni d'utiliser une électronique externe dédiée (rapide) pour détecter le passage par zéro de la tension et déclencher l'acquisition de la position par le capteur.

## Revendications

**1.** Méthode de détermination de la position angulaire du rotor d'une machine électrique synchrone, dans laquelle on fournit un capteur de position apte à acquérir la position angulaire dudit rotor, ladite méthode comprenant une étape de calibration dudit capteur de position dans laquelle une valeur d'offset dudit capteur de position utilisée pour ajuster une valeur mesurée par ledit capteur de position est déterminée à partir de la détection d'un passage par zéro de la force électromotrice d'une phase à vide du stator de ladite machine, ladite méthode étant **caractérisée en ce qu'**elle comprend:

- une étape de mesure (E4) de la tension de ladite phase à vide au moyen d'au moins un capteur de tension (10), consistant à mesurer périodiquement ladite tension selon un pas d'échantillonnage temporel donné ;
- une étape d'acquisition et de mémorisation (E4) des positions angulaires électriques dudit rotor à chaque passage par zéro avec une pente négative de ladite tension entre deux pas d'échantillonnage temporel consécutifs ;
- une étape de correction (E5) desdites positions angulaires ainsi obtenues, en fonction de la vitesse de rotation de ladite machine électrique et dudit pas d'échantillonnage temporel donné ; et
- une étape de filtrage (E6) desdites positions angulaires ainsi obtenues, de manière à obtenir une valeur moyenne représentative de ladite valeur d'offset dudit capteur de position.

2. Méthode selon la revendication 1, **caractérisée en ce que** ladite étape de correction (E5) est réalisée après ladite étape de filtrage (E6), de sorte à appliquer ladite correction en fonction de la vitesse de rotation de ladite machine électrique et dudit pas d'échantillonnage temporel donné, directement sur ladite valeur moyenne issue de ladite étape de filtrage.

3. Méthode selon l'une quelconque des revendications 1 ou 2, **caractérisée en ce que** ladite étape de mesure (E4) de la tension de ladite phase à vide est déclenchée après une étape préalable de vérification (E1) consistant à vérifier que le signe de la dérivée de ladite tension est négatif.

4. Méthode selon la revendication 3, **caractérisée en ce que** ladite étape préalable de vérification (E1) consiste en outre à vérifier que la vitesse de rotation de ladite machine électrique est non nulle et sensiblement stable.

5. Méthode selon l'une quelconque des revendications 3 ou 4, **caractérisée en ce que** ladite étape préalable de vérification (E1) consiste en outre à vérifier que le stator n'est parcouru par aucun courant.

6. Méthode selon l'une quelconque des revendications précédentes, **caractérisée en ce que** ladite étape de filtrage (E6) consiste à appliquer un filtrage de type passe-bas.

7. Méthode selon l'une quelconque des revendications précédentes, **caractérisée en ce que** ladite étape de filtrage (E6) comprend l'établissement (E60) d'au moins une plage angulaire d'exclusion dudit filtrage et, lorsqu'une position angulaire acquise tombe dans ladite plage angulaire d'exclusion, l'application (E61) d'un décalage angulaire à chacune desdites positions angulaires pour sortir de ladite plage angulaire d'exclusion, l'application (E62) d'un filtrage de type passe-bas aux dites positions angulaires ainsi décalées et le retrait (E63) dudit décalage angulaire à la valeur obtenue après filtrage.

8. Méthode selon la revendication 7, **caractérisée en ce que** l'application dudit décalage angulaire entraîne une remise à l'état initial (E64) d'un compteur apte à déterminer que le filtrage a convergé après un temps de convergence ($T_{conv}$) préalablement déterminé en fonction de la vitesse de rotation de ladite machine électrique, au terme duquel ladite valeur obtenue après filtrage est validée.

9. Méthode selon l'une quelconque des revendications précédentes, **caractérisée en ce qu'**elle comprend une étape de correction (E7) de ladite valeur d'offset dudit capteur de position, en fonction de la position dudit capteur de tension.

10. Méthode selon l'une quelconque des revendications précédentes, **caractérisée en ce qu'**on utilise plusieurs capteurs de tension aptes à fournir plusieurs mesures distinctes de tension de phase ou phase-phase à vide, **en ce qu'**on exécute en parallèle lesdites étapes (E1-E7) pour chacune desdites mesures de tension et **en ce qu'**on réalise une étape de pondération (E8) des différents résultats obtenus à partir desdits capteurs de tension.

11. Programme d'ordinateur comprenant des instructions pour exécuter la méthode selon l'une quelconque des revendications précédentes.

**Patentansprüche**

1. Verfahren zur Bestimmung der Winkelposition des Rotors einer elektrischen Synchronmaschine, wobei ein Positionssensor bereitgestellt wird, der geeignet ist, die Winkelposition des Rotors zu erfassen, wobei das Verfahren einen Schritt der Kalibrierung des Positionssensors umfasst, in welchem ein Offsetwert des Positionssensors, der verwendet wird, um einen von dem Positionssensor gemessenen Wert zu berichtigen, ausgehend von der Erkennung eines Nulldurchgangs der elektromotorischen Kraft einer Leerlaufphase des Stators der Maschine bestimmt wird, wobei das Verfahren **dadurch gekennzeichnet ist, dass** es umfasst:

- einen Schritt der Messung (E4) der Spannung der Leerlaufphase mittels wenigstens eines Spannungssensors (10), der darin besteht, diese Spannung periodisch gemäß einem gegebenen zeitlichen Abtastschritt zu messen;
- einen Schritt der Erfassung und der Speicherung (E4) der elektrischen Winkelpositionen des Rotors bei jedem Nulldurchgang mit einer negativen Steigung der Spannung zwischen zwei aufeinander folgenden zeitlichen Abtastschritten;
- einen Schritt der Korrektur (E5) der so erhaltenen Winkelpositionen in Abhängigkeit von der Drehzahl der elektrischen Maschine und von dem gegebenen zeitlichen Abtastschritt; und
- einen Schritt der Filterung (E6) der so erhaltenen Winkelpositionen, um einen Mittelwert zu erhalten, der für den Offsetwert des Positionssensors repräsentativ ist.

2. Verfahren nach Anspruch 1, **dadurch gekennzeichnet, dass** der Korrekturschritt (E5) nach dem Filterungsschritt (E6) durchgeführt wird, um die Korrektur in Abhängigkeit von der Drehzahl der elektrischen Maschine und von dem gegebenen zeitlichen Abtastschritt direkt auf den Mittelwert aus dem Filterungsschritt anzuwenden.

3. Verfahren nach einem der Ansprüche 1 oder 2, **dadurch gekennzeichnet, dass** der Schritt der Messung (E4) der Spannung der Leerlaufphase nach einem vorangehenden Überprüfungsschritt (E1) ausgelöst wird, der darin besteht zu überprüfen, ob das Vorzeichen der Ableitung der Spannung negativ ist.

4. Verfahren nach Anspruch 3, **dadurch gekennzeichnet, dass** der vorangehende Überprüfungsschritt (E1) außerdem darin besteht zu überprüfen, ob die Drehzahl der elektrischen Maschine nicht gleich null und im Wesentlichen stabil ist.

5. Verfahren nach einem der Ansprüche 3 oder 4, **dadurch gekennzeichnet, dass** der vorangehende Überprüfungsschritt (E1) außerdem darin besteht zu überprüfen, ob der Stator nicht von irgendeinem Strom durchflossen wird.

6. Verfahren nach einem der vorhergehenden Ansprüche, **dadurch gekennzeichnet, dass** der Filterungsschritt (E6) darin besteht, eine Filterung vom Tiefpasstyp anzuwenden.

7. Verfahren nach einem der vorhergehenden Ansprüche, **dadurch gekennzeichnet, dass** der Filterungsschritt (E6) die Festlegung (E60) wenigstens eines Winkelbereichs des Ausschlusses der Filterung und, wenn eine erfasste Winkelposition in diesen Winkelbereich des Ausschlusses fällt, die Anwendung (E61) einer Winkelverschiebung auf jede der Winkelpositionen, um den Winkelbereich des Ausschlusses zu verlassen, die Anwendung (E62) einer Filterung vom Tiefpasstyp auf die so verschobenen Winkelpositionen und die Rückgängigmachung (E63) der Winkelverschiebung bei dem nach der Filterung erhaltenen Wert umfasst.

8. Verfahren nach Anspruch 7, **dadurch gekennzeichnet, dass** die Anwendung der Winkelverschiebung eine Rücksetzung eines Zählers in den Ausgangszustand (E64) nach sich zieht, der geeignet ist zu bestimmen, ob die Filterung nach einer im Voraus in Abhängigkeit von der Drehzahl der elektrischen Maschine bestimmten Konvergenzzeit ($T_{conv}$), nach deren Ablauf der nach der Filterung erhaltene Wert validiert wird, konvergiert hat.

9. Verfahren nach einem der vorhergehenden Ansprüche, **dadurch gekennzeichnet, dass** es einen Schritt der Korrektur (E7) des Offsetwertes des Positionssensors in Abhängigkeit von der Position des Spannungssensors umfasst.

10. Verfahren nach einem der vorhergehenden Ansprüche, **dadurch gekennzeichnet, dass** mehrere Spannungssensoren verwendet werden, die geeignet sind, mehrere verschiedene Messungen einer Phasenspannung oder Phase-Phase-Spannung im Leerlauf zu liefern, dadurch, dass die Schritte (E1-E7) für jede der Spannungsmessungen parallel ausgeführt werden, und dadurch, dass ein Schritt der Gewichtung (E8) der verschiedenen Ergebnisse durchgeführt wird, die ausgehend von den Spannungssensoren erhalten wurden.

11. Computerprogramm, welches Anweisungen zur Ausführung des Verfahrens nach einem der vorhergehenden Ansprüche umfasst.

**Claims**

1.  Method for determining the angular position of the rotor of a synchronous electrical machine, in which a position sensor is provided which is capable of acquiring the angular position of said rotor, said method comprising a step of calibration of said position sensor in which an offset value of said position sensor used to adjust a value measured by said position sensor is determined from the detection of a crossover of the electromotor force of an off-load phase of the stator of said machine, said method being **characterized in that** it comprises:

    - a step of measurement (E4) of the voltage of said off-load phase by means of at least one voltage sensor (10), consisting in periodically measuring said voltage according to a given time sampling step;
    - a step of acquisition and of storage (E4) of the electrical angular positions of said rotor on each crossover with a negative slope of said voltage between two consecutive time sampling steps;
    - a step of correction (E5) of said duly obtained angular positions, as a function of the speed of rotation of said electrical machine and of said given time sampling step; and
    - a step of filtering (E6) of said duly obtained angular positions, so as to obtain an average value representative of said offset value of said position sensor.

2.  Method according to Claim 1, **characterized in that** said correction step (E5) is performed after said filtering step (E6), so as to apply said correction as a function of the speed of rotation of said electrical machine and of said given time sampling step, directly on said average value deriving from said filtering step.

3.  Method according to either one of Claims 1 and 2, **characterized in that** said step of measurement (E4) of the voltage of said off-load phase is triggered after a preliminary checking step (E1) consisting in checking that the sign of the derivative of said voltage is negative.

4.  Method according to Claim 3, **characterized in that** said preliminary checking step (E1) further consists in checking that the speed of rotation of said electrical machine is non-zero and substantially stable.

5.  Method according to either one of Claims 3 and 4, **characterized in that** said preliminary checking step (E1) further consists in checking that the stator is not passed through by any current.

6.  Method according to any one of the preceding claims, **characterized in that** said filtering step (E6) consists in applying a filtering of low-pass type.

7.  Method according to any one of the preceding claims, **characterized in that** said filtering step (E6) comprises the establishing (E60) of at least one angular range of exclusion of said filtering and, when an acquired angular position drops into said angular range of exclusion, the application (E61) of an angular offset to each of said angular positions to exit from said angular range of exclusion, the application (E62) of a filtering of low-pass type to said duly offset angular positions and the subtraction (E63) of said angular offset from the value obtained after filtering.

8.  Method according to Claim 7, **characterized in that** the application of said angular offset results in a resetting to the initial state (E64) of a counter capable of determining that the filtering has converged after a convergence time ($T_{conv}$) previously determined as a function of the speed of rotation of said electrical machine, at the end of which said value obtained after filtering is validated.

9.  Method according to any one of the preceding claims, **characterized in that** it comprises a step of correcting (E7) of said offset value of said position sensor, as a function of the position of said voltage sensor.

10. Method according to any one of the preceding claims, **characterized in that** a number of voltage sensors are used that are capable of supplying several distinct measurements of off-load phase or phase-phase voltage, **in that** said steps (E1-E7) are executed in parallel for each of said voltage measurements and **in that** a step of weighting (E8) of the different results obtained from said voltage sensors is performed.

11. Computer program comprising instructions for executing the method according to any one of the preceding claims.

FIG. 1

FIG. 2

FIG. 3

DECALAGE FILTRAGE

E61

**DECALAGE**
POUR SORTIR DE LA ZONE
INTERDITE

(généralement 180°)

E60 — zone intedite? — OUI

NON

**FILTRE PASSE-BAS** — E62

E63 + —

DECALAGE FILTRAGE

E64 — **Attente convergence filtre**
(compteur d'échantillons ou
de temps)

E65 — $T_{compteur} > T_{conv}$

OUI

E66 — OFFSET
VALIDE

FIG. 4

Angle électrique

Angles interdits pour le filtrage

360°

$\delta_i$

0°

$\delta_i$

Temps (s)

FIG.5

FIG.6

**EP 2 972 114 B1**

## RÉFÉRENCES CITÉES DANS LA DESCRIPTION

### Documents brevets cités dans la description

• CN 101414800